# EUROPEAN PATENT SPECIFICATION

(11) **EP 2 672 236 B1**
(45) Date of publication and mention of the grant of the patent: **28.06.2023**
(21) Application number: 12741939.8
(22) Date of filing: 30.01.2012
(51) Int. Cl.: G01F 15/075, F23K 5/00, G01F 15/06, F23N 5/18, G01F 1/66

(54) **FLOW MEASUREMENT DEVICE**
FLUSSMESSGERÄT
DISPOSITIF DE MESURE D'ÉCOULEMENT

(30) Priority: 04.02.2011 JP 2011023286; 08.03.2011 JP 2011050532
(43) Date of publication of application: 11.12.2013
(73) Proprietor: Panasonic Holdings Corporation, Osaka 571-8501 (JP)
(72) Inventor: YOKOHATA, Mitsuo, Chuo-ku Osaka 540-6207 (JP); NAWA, Motoyuki, Chuo-ku Osaka 540-6207 (JP); TATSUI, Hiroshi, Chuo-ku Osaka 540-6207 (JP); NAKAMURA, Akinari, Chuo-ku Osaka 540-6207 (JP)
(74) Representative: SSM Sandmair
(86) International application number: PCT/JP2012/000573
(87) International publication number: WO 2012/105218

(56) References cited:
- EP-A1- 2 105 715
- JP-A- 2006 313 114
- JP-A- 2006 313 114
- JP-A- 2007 024 753
- JP-A- 2008 107 262
- JP-A- 2008 107 262
- JP-A- 2008 196 991
- JP-A- 2008 196 991

## Description

### Technical Field

The present invention relates to a flow meter device which is capable of determining a gas instrument in use. Particularly, the present invention relates to a flow meter device (gas meter) which is capable of determining whether or not the gas instrument in use is a fuel cell.

### Background Art

As a flow meter device for measuring a flow (flow rate) of a gas, there is conventionally known a flow meter device which has a function of determining a kind of a gas instrument which uses a gas. For example, Patent Literature 1 discloses a flow meter device for determining a gas instrument having been stopped, based on two information which are information indicating start of the use of the gas instrument, and flow (flow rate) information.

Specifically, it is determined whether or not (the use of) the gas instrument has been started and it is determined whether or not (the use of) the gas instrument has been stopped, based on a desired specified time interval difference flow found from instantaneous flows measured at predetermined time intervals. In particular, it is determined whether or not (the use of) the gas instrument has been stopped, based on a stop determination condition from among gas instruments determined as those having been started. The predetermined time intervals in the determination as to the gas instrument having been started and the determination as to the gas instrument having been stopped are 2-second intervals. The specified time intervals for calculation of the difference flow are 4 seconds which are twice as long as the predetermined time intervals.

Patent Literature 2 discloses a gas meter device in which a difference value between instantaneous flows is calculated, a change amount of the difference value is compared to a pre-registered change determination value, a change in a use state of a gas instrument is determined, and further the gas instrument is determined.

Specifically, the gas flow is measured at 2-second intervals, difference data of gas flows at every 2 seconds is output, and it is determined that a state change in the gas instrument has occurred when the difference data exceeds the change determination value. If it is determined that the state change in the gas instrument has occurred, then this state change is compared to state change values of respective gas instruments which are pre-registered, to determine the gas instrument and a state of the gas instrument. The time interval at which the difference of the flows is calculated is changeable as desired. For example, it is disclosed that the time interval may be changed into an integral multiple of a shortest measurement time interval (2 seconds).

Fuel cells have been put into practical use in large-scaled or medium-scaled power generation equipment. In recent years, development of a fuel cell for household use progresses, and such a fuel cell has been available commercially. Hydrogen is required in power generation in the fuel cell. In the fuel cell for household use, a hydrocarbon-based gas (city gas or liquefied petroleum gas (LP gas), etc.) supplied to customer home is used as a hydrogen supply source. The fuel cell for household use may be regarded as "gas instrument" because it uses the gas.

However, in the conventional configuration for determining the gas instrument, misdetermination as to the fuel cell and another gas instrument may occur if the gas instrument is determined based on a flow change for a short time.

JP 2008 107262 A describes a device for accurately discriminating gas appliances having relatively low gas consumption, such as gas cooking stoves, gas space heaters, and gas fan heaters. The device for discriminating gas appliance discriminating gas appliances in use from among the gas appliances connected to a gas supply line, has a flow pattern table in which a plurality of partial flow patterns are classified with respect to a plurality of kinds of gas appliances, with the partial flow patterns being extracted from a series of gas flow patterns generated with the use of gas; and an appliance discriminating table, having a combination of a plurality of partial flow patterns corresponding to respective gas appliances and weighting values on the partial flow patterns for each of the plurality of kinds of gas appliances. A gas appliance discriminating means extracts partial flow patterns that match detected gas flow pattern from the pattern table and finds the sum of scores, obtained by accumulating the extracted partial flow patterns according to the weighting values in the discriminating table for each of the gas appliances, and discriminates a gas appliance being used, based on the total points.

JP 2006 313114 A describes a gas meter device, that by implementing an operation sequentially of the variation of difference of instantaneous flow rate outputted from a flow-metering means, the variation of busy condition of gas apparatuses is discriminated from that variability, capable of comparing the measured variation (difference value) of flow rate of gas with the registered data to discriminate a kind of gas apparatus. The gas meter device is comprised by containing a flow-metering means, connected with gas supply lines for domestic use, measuring gas flow rate at a constant time interval, an operation means calculating the difference of flow rate outputted from the flow-metering means, and a comparing and discriminating means where, by comparing the calculated difference from the operation means with the magnitude of variation discriminating value registered in a memory means, the variation is discriminated of busy condition of gas apparatuses.

### Citation List

### Patent Literature

Patent Literature 1: Japanese-Laid Open Patent Application Publication No. 2007-024807
Patent Literature 2: Japanese-Laid Open Patent Application Publication No. 2006-313114
Patent Literature 3: JP 2008 107262 A
Patent Literature 4: JP 2006 313114 A

### Summary of the Invention

The invention is defined by the subject-matter of independent claim 1. The dependent claims are directed to advantageous embodiments.

### Advantages of the Invention

Advantageously, it is provided a flow meter device which is capable of accurately determining a gas instrument in use even when the gas instrument in use is a fuel cell. Advantageously, there is provided a flow meter device for measuring flows of a gas flowing into a plurality of gas instruments including a fuel cell, comprising: a fluid passage in which the gas flows; a flow measuring section for measuring a gas flow in the fluid passage; a determination flow data storage section for storing time series set data of the gas flow as determination flow data, for respective kinds of the plurality of gas instruments; and a gas instrument determiner section which compares the time series set data of actual measurement values of the gas obtained in a first determination operation period to the determination flow data and determines whether the gas instrument in use is a fuel cell or a general gas instrument other than the fuel cell; wherein the first determination operation period which is a period from a time point when inflowing of the gas starts until a predetermined time lapses, and a second determination operation period which is a period which ends after the first determination operation period ends are set as periods in which the gas instrument determiner section is allowed to perform a determination operation; and wherein only if the gas instrument determiner section determines that there is a possibility that the gas instrument in use is the fuel cell or determines that the gas instrument in use is not the general gas instrument, the gas instrument determiner section shifts from the first determination operation period to the second determination operation period; wherein the gas instrument determiner section compares the time series set data of the actual measurement values of the gas flow obtained in the second determination operation period to the determination flow data and determines whether or not the gas instrument in use is the fuel cell.

It is configured such that the second determination operation period is set to start in a period after the first determination operation period starts and before the first determination operation period ends.

The flow measuring section may be configured to measure the gas flow at preset constant measurement time intervals; and the gas instrument determiner section may be configured to determine the gas instrument using the actual measurement value measured at each of the preset constant measurement time intervals in the first determination operation period; and the gas instrument determiner section may be configured to determine the gas instrument using the actual measurement value extracted from actual measurement values respectively measured at plural preset constant measurement time intervals, with a frequency which is once in every plural preset constant measurement time intervals in the second determination operation period.

The flow measuring section may be configured to measure the gas flow at first measurement time intervals in the first determination operation period; and the flow measuring section may be configured to measure the gas flow at second measurement time intervals in the second determination operation period.

The determination flow data stored in the determination flow data storage section may include time series set data of difference flows for respective kinds of the plurality of gas instruments; and the gas instrument determiner section may be configured to perform the determination operation in such a manner that the gas instrument determiner section compares a difference value between two gas flows measured continuously by the flow measuring section, to the determination flow data stored in the determination flow data storage section, the difference value being used as the actual measurement value.

The determination flow data stored in the determination flow data storage section may include time series set data of difference flows for respective kinds of the plurality of gas instruments; and the gas instrument determiner section may be configured to perform the determination operation in such a manner that the gas instrument determiner section compares a difference value calculated from instantaneous flows measured by the flow measuring section at times which are apart by a time interval which is an integral multiple of the preset constant measurement time interval, to the determination flow data stored in the determination flow data storage section, the difference value being used as the actual measurement value.

The above and further features of the invention will more fully be apparent from the following detailed description with accompanying drawings.

Advantageously, it is provided a flow meter device which is capable of more accurately determining a gas instrument in use even when the gas instrument in use is the fuel cell.

### Brief Description of Drawings

[Fig. 1] Fig. 1 is a block diagram showing an example of a configuration of a flow meter device according to Embodiment 1 of the present invention, and an example of its utilization state.
[Fig. 2] Fig. 2 is a schematic view showing instantaneous flows measured by the flow meter device of Fig. 1, and differences between the instantaneous flows.
[Fig. 3] Fig. 3A and 3B are schematic time charts showing an example of a first determination operation period and a second determination operation period in the flow meter device of Fig. 1.
[Fig. 4] Fig. 4A and 4B are schematic time charts showing a difference in measurement time interval between the first determination operation period and the second determination operation period of Figs. 3A and 3B.
[Fig. 5] Figs. 5A and 5B are an example of actual measurement charts corresponding to the schematic time charts of Figs. 3A and 3B, respectively.
[Fig. 6] Figs. 6A and 6B are an example of actual measurement charts corresponding to the schematic time charts of Figs. 4A and 4B, respectively.
[Fig. 7] Fig. 7 is a flowchart showing an example of determination control performed in a gas instrument determiner section in the flow meter device of Fig. 1.
[Fig. 8] Fig. 8 is a flowchart showing another example of determination control performed in a gas instrument determiner section in the flow meter device of Fig. 1.

### Description of Embodiments

Hereinafter, preferred embodiments of the present invention will be described reference to the drawings. Throughout the drawings, the same or corresponding components are identified by the same reference numerals and will not be descried in repetition.

### (Embodiment 1)

### [Configuration of flow meter device]

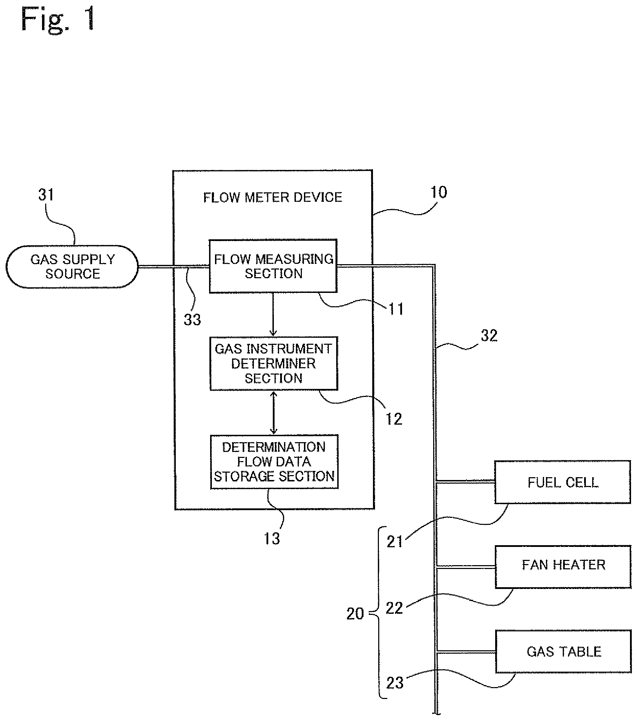

First of all, an example of a configuration of a flow meter device according to Embodiment 1 of the present invention, and an example of a utilization state (form) of the flow meter device will be specifically described with reference to Fig. 1. As shown in Fig. 1, a flow meter device 10 of the present embodiment is connected to a gas supply source 31 and to a gas instrument 20 via a gas supply line 32.

The gas supply source 31 is connected to a raw material gas source (e.g., infrastructure of city gas or liquefied petroleum gas (LP gas), etc.), and supplies a hydrocarbon-based gas (e.g., natural gas containing methane as a major component, LP gas containing propane as a major component) to the gas supply line 32 and the gas instrument 20, according to a demand. As the gas supply line 32, a known gas pipe is used, but a known path other than the gas pipe may be used. Although not shown in Fig. 1, the gas supply line 32 is provided with on-off valves, branching mechanisms, etc..

As the gas instrument 20, for example, a fuel cell 21, a fan heater 22, and a gas table 23 are illustrated. A specific configuration of the fuel cell 21 is not particularly limited. In the present embodiment, for example, the configuration of the fuel cell 21 may be such that a fuel cell stack, a desulfurization device, a raw material supply device, an oxidizing gas supply device, a reformer, a heat supply device, lines connecting these components, valves provided on the lines, etc., which is a known configuration.

The fuel cell stack is a stack of a plurality of power generation cells. A specific kind of each power generation cell is not particularly limited, and there are a polymer electrolyte fuel cell (power generation cell), a solid oxide fuel cell, a phosphorous acid fuel cell, a molten carbonate fuel cell, etc., which are known fuel cells. Specific configurations of the desulfurization device, the raw material supply device, the oxidizing gas supply device, the reformer, the heat supply device, the lines and the valves are not particularly limited, and known components may be suitably used.

Activation of the gas instrument 20 is assumed as follows. A cooking instrument is activated only at the time of cooking, and its use time is relatively short. A heating appliance is activated for a time period when an interior of a room is warmed, and its use time is relatively long. The fuel cell 21 is always activated for power generation.

The flow meter device 10 is provided on the gas supply line 32 to measure flows (flow rates) of a gas flowing into the plurality of gas instruments 20 including the fuel cell 21. The flow meter device 10 includes a flow measuring section 11, a gas instrument determiner section 12, and a determination flow data storage section 13. The flow measuring section 11 measures a gas flow in a fluid passage 33 in which the gas flows. A specific configuration of the flow measuring section 11 is not particularly limited. In the present embodiment, as the flow measuring section 11, an ultrasonic flow meter unit for measuring a flow of a fluid such as a gas using an ultrasonic wave is used.

As a typical example of the ultrasonic flow meter unit, there is an ultrasonic flow meter unit which utilizes a propagation time difference method. In the propagation time difference method, ultrasonic transmitters/receivers are provided at an upstream side and a downstream side of the fluid passage 33 for which a flow is to be measured, and an ultrasonic wave is transmitted and received alternately between them. Based on a difference between forward propagation time and reverse propagation time, a flow velocity of the fluid is measured, and the flow of the fluid is measured by utilizing the flow velocity and a cross-sectional area of the fluid passage 33. The fluid passage 33 is a portion of the flow meter device 10, and is connected to the gas supply line 32, although this is schematically shown in Fig. 1.

A specific configuration of the ultrasonic flow meter unit utilizing the propagation time difference method and a specific configuration of the fluid passage 33 are not particularly limited, and known configurations may be suitably used. As the flow measuring section 11, an electronic flow meter unit such as a flow sensor may be used, instead of the ultrasonic flow meter unit, but it is not particularly limited.

The gas instrument determiner section 12 determines the kind of the gas instrument 20 in use, from among the gas instruments 20 connected to the gas supply line 32. In the present embodiment, as will be described later, specifically, the gas instrument determiner section 12 determines the gas instrument 20 by comparing actual measurement values of gas flows obtained in two kinds of determination operation periods, to determination flow data pre-stored. The gas instrument determiner section 12 may perform an operation for addressing a leakage of the gas, as necessary, after it determines the kind of the gas instrument 20.

The determination flow data storage section 13 contains the determination flow data of at least the fuel cell 21 among the plurality of gas instruments 20 for each of the first determination operation period and the second determination operation period. Note that the determination flow data storage section 13 may contain the determination flow data about the gas instrument 20 (fan heater 22, gas table 23, etc..) other than the fuel cell 21, as a matter of course.

In the flow meter device 10, the flow measuring section 11 measures a gas flow, and the gas instrument determiner section 12 obtains an actual measurement value of the gas flow. The determination flow data storage section 13 contains the determination flow data set for respective kinds of the gas instruments 20. The gas instrument determiner section 12 compares the obtained actual measurement value to the determination flow data stored in the determination flow data storage section 13, to determine the kind of the gas instrument 20 in use. The determination flow data will be described in detail later.

A specific configuration of the gas instrument determiner section 12 and a specific configuration of the determination flow data storage section 13 are not particularly limited, and known configurations may be suitably used. Specifically, for example, the gas instrument determiner section 12 may be a functional configuration (configuration implemented by an operation of the processor according to a program stored in a storage section (not shown)) of a processor (not shown in Fig. 1) provided in the flow meter device 10, or a known logic circuit or the like composed of a switching element, a subtracter, a comparator, etc.. The determination flow data storage section 13 may be configured as a known non-volatile memory, a known hard disc drive, a combination of these, or the like. In a case where the flow meter device 10 is a gas meter including a microcomputer, the determination flow data storage section 13 is implemented by a program, etc., incorporated into the microcomputer.

The flow meter device 10 may include constituents other than the flow measuring section 11, the gas instrument determiner section 12, and the determination flow data storage section 13. For example, as these constituents, there are a control section including the processor, a display section, a storage section other than the determination flow data storage section 13, a time measuring section, a notification section, a gas shut-off section, etc., which are merely exemplary.

### [Determination flow data]

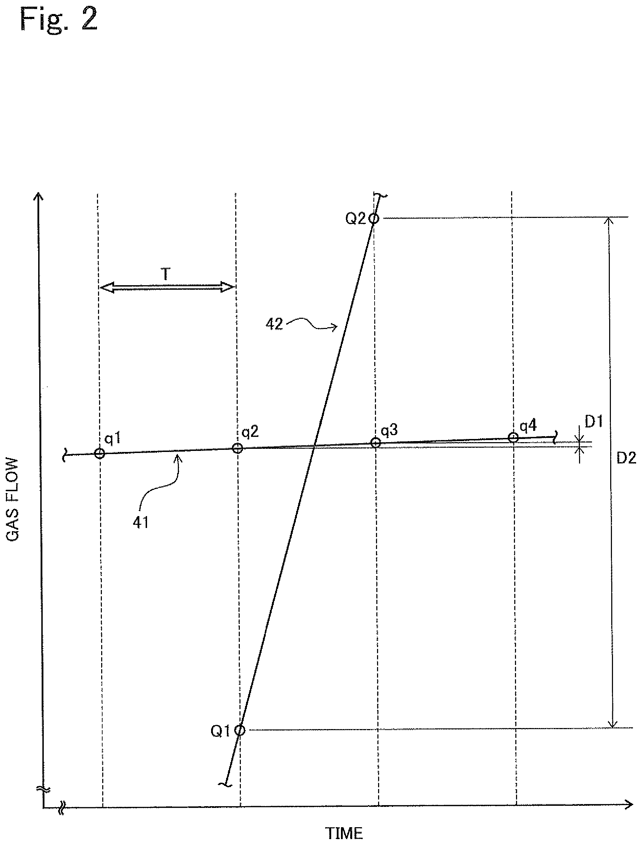

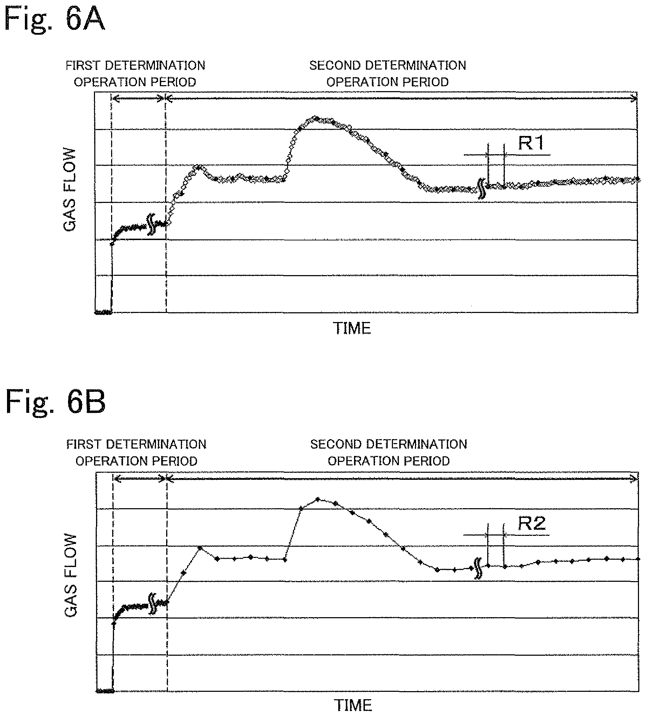

Next, the determination flow data used in the flow meter device 10 according to the present embodiment will be described with reference to Figs. 2 to Figs. 6A and 6B, along with the first determination operation period and the second determination operation period which are set in the gas instrument determiner section 12.

The actual measurement value of the gas flow used in the gas instrument determiner section 12 is not particularly limited. Typically, as the actual measurement value of the gas flow, there is an instantaneous flow measured by the flow measuring section 11. Instead of the instantaneous flow, a difference value between instantaneous flows derived by calculating two continuous measurement values may be used. The gas instrument determiner section 12 compares the instantaneous flow or the difference value to the determination flow data, to perform a determination operation of the gas instrument 20. Therefore, the determination flow data is also the instantaneous flow or the difference value. More specifically, the determination flow data is stored in the determination flow data storage section 13 as time series set data.

This will be described specifically with reference to Fig. 2. Fig. 2 is a view showing changes in gas flows (instantaneous flows) which occur over time, when the fuel cell 21 and the general gas instrument 20 (e.g., fan heater 22 or the gas table 23) are started (activated). As shown in Fig. 2, the flow measuring section 11 is configured to measure the instantaneous flow of the gas flow at measurement time intervals T. In the example shown in Fig. 2, the set of the instantaneous flows of the fuel cell 21 is composed of q1, q2, q3, and q4.

In the case where the flow measuring section 11 is configured to measure the instantaneous flow at predetermined measurement time intervals T, time series set data 41 is obtained by accumulating the instantaneous flows. Therefore, the determination flow data may be configured as the time series set data 41 (q1 ~ q4) of the instantaneous flows or time series data 42 (Q1, Q2) of the instantaneous flows, for respective kinds of the gas instruments 20. Furthermore, the determination flow data may be a difference value (e.g., q2 - q1) between two continuous instantaneous flows instead of one instantaneous flow, or a combination of the instantaneous flow and the difference value.

Fig. 2 also shows an example of the difference value. Regarding the time series set data 41, a difference value D1 between two instantaneous flows which are second and third instantaneous flows, among the four instantaneous flows, is represented, while regarding the time series set data 42, a difference value D2 between two instantaneous flows is represented. This difference value may be calculated from two continuous instantaneous flows or from two instantaneous flows measured at times which are apart by a time interval (e.g., time interval which is an integral multiple of the measurement time interval T) exceeding the measurement time interval T. The difference value calculated from two instantaneous flows measured at times which are apart by a time interval exceeding the measurement time interval T is, for example, (q3 - q1) or (q4 - q2) in Fig. 2.

The first determination operation period may be set to a desired time length. As the first determination operation period, a time period from a time point when the gas flow changes until a time point when the gas flow is stabilized may be set.

The second determination operation period may be set as a period which ends after the first determination operation period ends, or may be set as a period which starts just after the first determination operation period ends. Or, the first determination operation period and the second determination operation period may be set as concurrent periods which start at a time point when inflowing of the gas starts. The second determination operation period may be set to end at a time point when power generation of the fuel cell 21 ends.

The gas flow at a time point when the gas instrument 20 is started-up (activated), as in the example of Fig. 2, will be referred to as "start-up flow". In a case where a gas instrument having a start-up flow close to a start-up flow of the fuel cell 21, for example, fan heater 22, is prestored (registered), there is a possibility that it is misdetennined that the fan heater 22 is in use, even though the fuel cell 21 is actually in use, if the gas instrument in use is determined using a gas flow change in the first determination operation period only.

To avoid this, in an embodiment not according to the present invention, in addition to a result of determination in the first determination operation period, a result of determination in the second determination operation period is used. Since the second determination operation period is a period which ends after the first determination operation period ends, a flow waveform of the fuel cell 21 can be detected in this period. Thus, in an embodiment not according to the present invention, it can be detected that the fuel cell 21 is in use in the determination performed in the second determination operation period, even if it cannot be detected that the fuel cell 21 is in use in the determination performed in the first determination operation period. This makes it possible to determine the gas instrument more accurately.

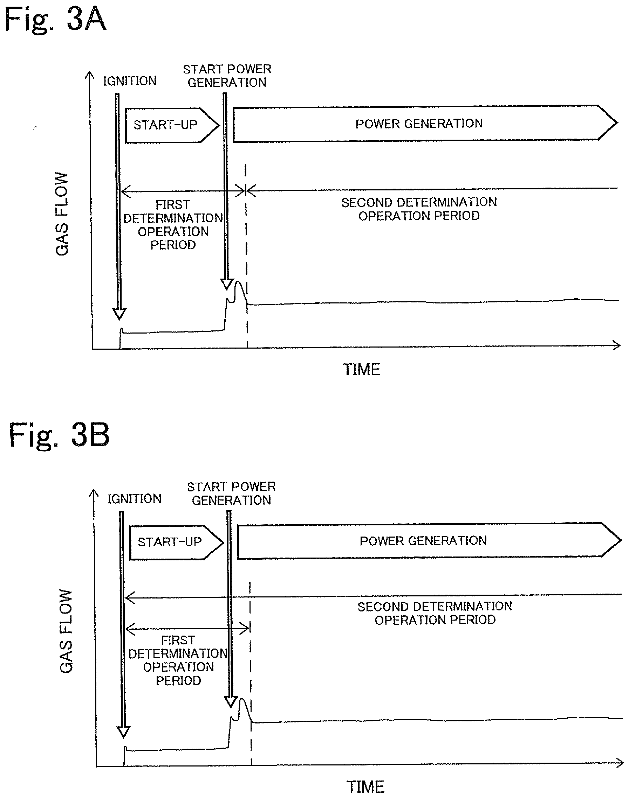

In a case where the second determination operation period overlaps with the first determination operation period, it need not be set to start at the same time that the first determination operation period starts. In other words, the second determination operation period may be set to start in a period after the first determination operation period starts and before the first determination operation period ends. For example, as schematically shown in Figs. 3A and 3B, the second determination operation period may be set to start when a specified time passes after the first determination operation period starts. Or, the first determination operation period may be set to end after an initial period of the power generation. That is, the end of the first determination operation period is not particularly limited so long as the first determination operation period includes a period when the fuel cell 21 is started-up (activated).

The gas instrument determiner section 12 may obtain the actual measurement value (instantaneous flow, difference value, etc.) at first measurement time intervals T, in the first determination operation period and obtain the actual measurement value at second measurement time intervals, in the second determination operation period. The flow measuring section 11 may measure the flow at measurement time intervals which are made different between the first determination operation period and the second determination operation period.

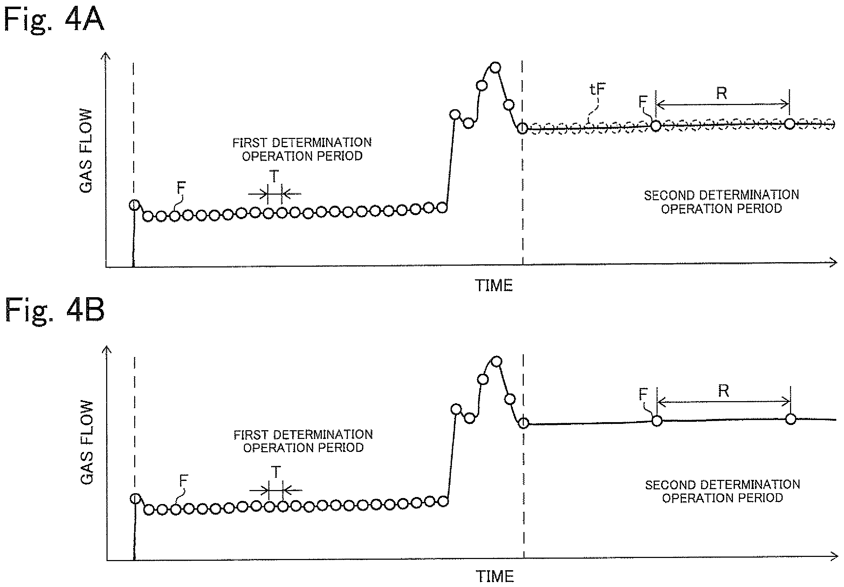

For example, as schematically shown in Fig. 4A, the flow measuring section 11 is configured to measure the instantaneous flow F (or difference value) of the gas flow at first measurement time intervals T all the time in both of the first determination operation period and the second determination operation period. By comparison, the gas instrument determiner section 12 is configured to obtain the instantaneous flow F measured at the first measurement time intervals T in the first determination operation period, to obtain the instantaneous flow F once in every plural flow measurement time intervals, and not to obtain other instantaneous flows tF in the second determination operation period. In Fig. 4A, the instantaneous flows tF which are not obtained by the gas instrument determiner section 12 are indicated by broken-line circles.

Or, as schematically shown in Fig. 4B, the flow measuring section 11 is configured to measure the instantaneous flow F of the gas flow at the first measurement time intervals T in the first determination operation period. In contrast, as shown in Fig. 4B, the flow measuring section 11 is configured to measure the instantaneous flow F of the gas flow at second measurement time intervals R different from the first measurement time intervals T in the second determination operation period. In this case, the gas instrument determiner section 12 may be configured to obtain the instantaneous flow F every time the flow measuring section 11 measures the instantaneous flow F. In this case, since the number of times of the flow measurement of the flow measuring section 11 can be reduced, power consumption of a battery built into the flow meter device 10 can be reduced.

Although in the examples of Figs. 4A and 4B, the second determination operation period is set to start after the first determination operation period ends, the first determination operation period and the second determination operation period may overlap with each other if the second determination operation period starts at the same time that the first determination operation period starts. In this case, the gas instrument determiner section 12 obtains the instantaneous flow F in every flow measurement as the actual measurement value in the first determination operation period and obtains the instantaneous flow F with a frequency which is once in every plural flow measurements so as to correspond to the second measurement time interval R as the actual measurement value in the second determination operation period. A length of the second measurement time interval R with respect to the first measurement time interval T is not particularly limited.

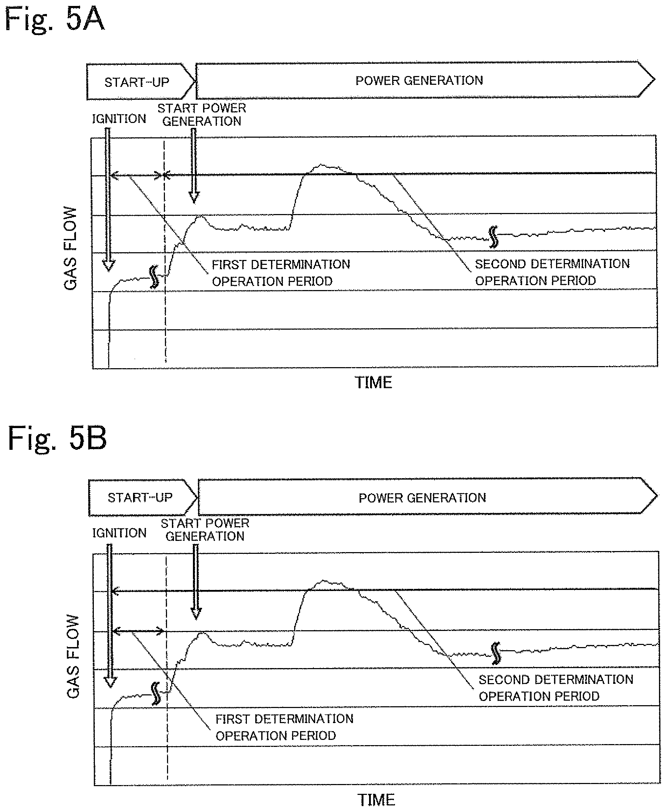

As specific examples based on the actual measurement values, regarding the first determination operation period and the second determination operation period schematically shown in Figs. 3A and 3B, time charts of Figs. 5A and 5B are illustrated. Likewise, as specific examples based on the actual measurement values, regarding the first determination operation period and the second determination operation period schematically shown in Figs. 4A and 4B, time charts of Figs. 6A and 6B are illustrated.

### [Determination of gas instrument]

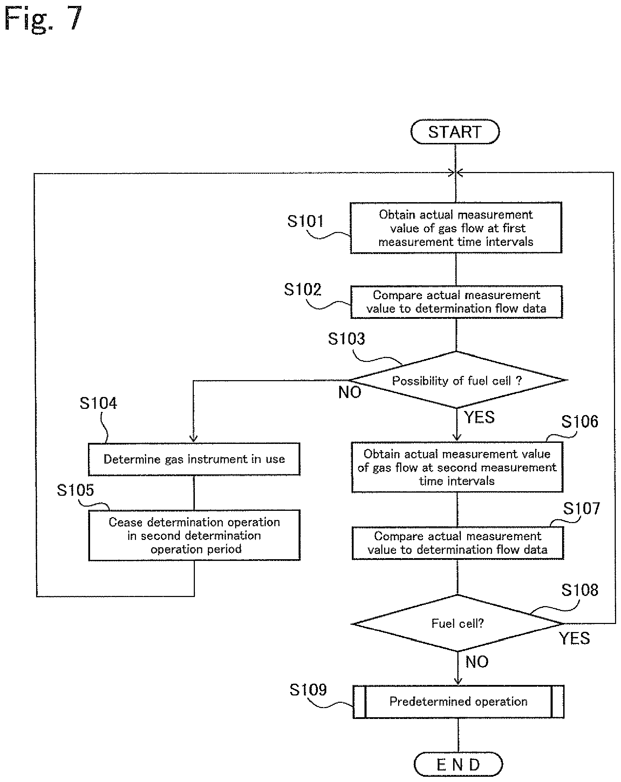

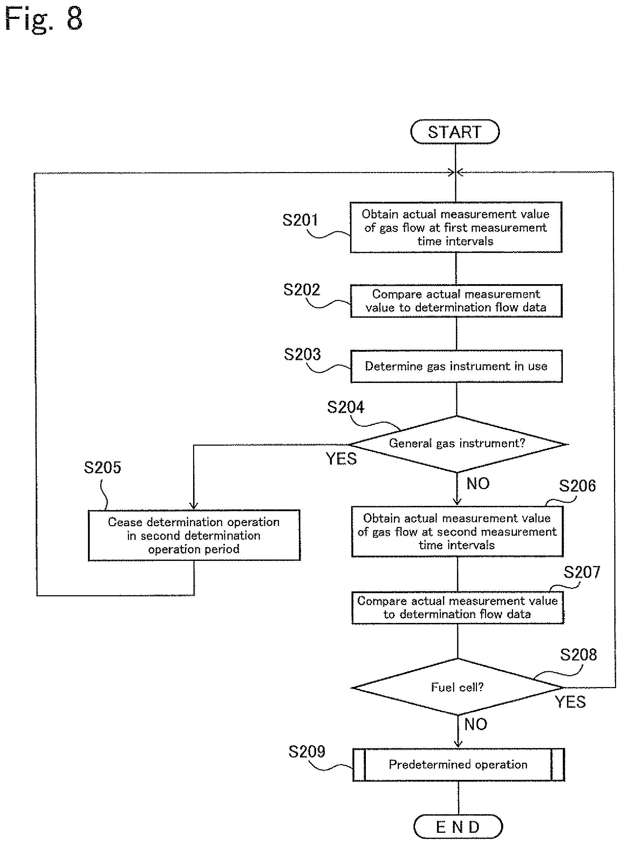

Next, the determination of the gas instrument 20, which is performed by the flow meter device 10 having the above configuration, will be described with reference to Figs. 7 and 8. In the examples of the determination of Figs. 7 and 8, as shown in Fig. 3A, the second determination operation period starts subsequently to the first determination operation period just after the first determination operation period ends. However, as shown in Fig. 3B, the first determination operation period and the second determination operation period may overlap with each other.

The flow measuring section 11 of the flow meter device 10 measures the actual measurement value of the gas flow at the first measurement time intervals T. When the inflowing of the gas is confirmed, as shown in Fig. 7, the gas instrument determiner section 12 starts control for determining the gas instrument 20 and obtains the actual measurement value (e.g., instantaneous flow F) of the gas flow at the first measurement time intervals T in the first determination operation period (step S101). The gas instrument determiner section 12 compares the obtained actual measurement value to the determination flow data stored in the determination flow data storage section 13 (step S102). The determination flow data read from the determination flow data storage section 13 at this time is data of the fuel cell 21 in the first determination operation period.

Then, the gas instrument determiner section 12 compares the determination flow data to the actual measurement value to determine whether or not there is a possibility that the gas instrument 20 in use is the fuel cell 21 (step S103). The determination flow data at this time may be stored, for example, as an allowable range of the instantaneous flow F (or difference value) for a time period from a time when inflowing of the gas starts. If the measured instantaneous flow F falls within this range, the gas instrument determiner section 12 determines that there is a possibility that the gas instrument 20 in use is the fuel cell 21, whereas if the measured instantaneous flow F does not fall within this allowable range, the gas instrument determiner section 12 determines that there is no possibility that the gas instrument 20 in use is the fuel cell 21.

If it is determined that there is no possibility that the gas instrument 20 in use is the fuel cell 21 (NO in step S103), the gas instrument determiner section 12 determines that the gas instrument 20 in use is a general gas instrument, and further determines what the gas instrument 20 in use is like (e.g., fan heater 22 or the gas table 23, etc.) (step S104). The determination flow data read from the determination flow data storage section 13 at this time is data of the gas instrument 20 other than the fuel cell 21.

At a time point when the gas instrument 20 in use is determined specifically, the gas instrument determiner section 12 ceases (stops, discontinues) the determination operation in the second determination operation period (step S105). As described above, since the second determination operation period is the determination operation period set to perform determination as to the fuel cell 21, the gas instrument determiner section 12 need not perform the determination operation in the second determination operation period, if the gas instrument 20 in use is the general gas instrument. After the gas instrument determiner section 12 ceases the determination operation in the second determination operation period, it may continue the determination control (return to step S101) or terminate the determination control (not shown in Fig. 7).

If it is determined that there is a possibility that the gas instrument 20 in use is the fuel cell 21 (YES in step S103), the gas instrument determiner section 12 shifts from the first determination operation period to the second determination operation period, and obtains the actual measurement value of the gas flow at the second measurement time intervals R (step S106). At this time, as shown in Fig. 4A, the gas instrument determiner section 12 may obtain the actual measurement value once in every plural flow measurements so as to correspond to the second measurement time interval R , among the actual measurement values measured at the first measurement time intervals T. Or, as shown in Fig. 4B, the gas instrument determiner section 12 may output a control command to the flow measuring section 11 to switch from the flow measurement at the first measurement time intervals T to the flow measurement at the second measurement time intervals R.

Then, the gas instrument determiner section 12 compares the obtained actual measurement value to the determination flow data stored in the determination flow data storage section 13 (step S107). The determination flow data read from the determination flow data storage section 13 at this time is data of the fuel cell 21 in the second determination operation period. Then, the result of the above comparison, the gas instrument determiner section 12 determines whether or not the gas instrument 20 in use is the fuel cell 21 (step S108).

The determination flow data at this time may be stored as an allowable range of the instantaneous flow F (or difference value) for a time period from a time when inflowing of the gas starts, as in the determination in the first determination operation period. If it is determined that the gas instrument 20 in use is the fuel cell 21 (YES in step S108), the gas instrument determiner section 12 may continue the determination control (return to step S101) or terminate the determination control (not shown in Fig. 7).

On the other hand, if it is determined that the gas instrument 20 in use is not the fuel cell 21 (NO in step S108), the fuel cell 21 is not activated but the gas flow different from that of the general gas instrument 20 is detected. Therefore, a predetermined operation for addressing this problem is performed (step 109), and the determination control is terminated. As a typical operation for addressing this problem, there is an operation for addressing a leakage of the gas. That is, if the gas flow is detected in a state in which the general gas instrument 20 and the fuel cell 21 are not in use, then it is estimated that there is a leakage of the gas. Therefore, a notification section (not shown in Fig. 1) may emit an alarm (warning), or a gas shut-off section (not shown in Fig. 1) may shut-off the gas in the gas supply line 32.

Another example of the determination control will be described. As shown in Fig. 8, the gas instrument determiner section 12 starts the control for determining the gas instrument 20, and obtains the actual measurement value (e.g., instantaneous flow F) of the gas flow at the first measurement time intervals T in the first determination operation period (step S201). The gas instrument determiner section 12 compares the obtained actual measurement value to the determination flow data stored in the determination flow data storage section 13 (step S202). The determination flow data read from the determination flow data storage section 13 at this time is not only the determination flow data of the fuel cell 21 in the first determination operation period but also the determination flow data of the another gas instrument 20.

Then, the gas instrument determiner section 12 determines what the gas instrument 20 in use is like, including the fuel cell 21 (e.g., fuel cell 21, fan heater 22 or the gas table 23, etc.) (step S203). Then, the gas instrument determiner section 12 determines whether or not the determined gas instrument 20 is the general gas instrument 20 (step S204). If it is determined that the determined gas instrument 20 is the general gas instrument 20 (YES in step S204, e.g., fan heater 22 or gas table 23), the gas instrument determiner section 12 ceases (stops, discontinues) a determination operation in the second determination operation period (step S205). After that, the gas instrument determiner section 12 may continue the determination control (return to step S201) or terminate the determination control (not shown in Fig. 8).

On the other hand, if it is determined that the determined gas instrument 20 is not the general gas instrument 20 (NO in step S204), there is a possibility that the gas instrument 20 in use is the fuel cell 21. Therefore, the gas instrument determiner section 12 shifts from the first determination operation period to the second determination operation period, and obtains the actual measurement value of the gas flow at the second measurement time intervals R (step S206). Then, the gas instrument determiner section 12 compares the obtained actual measurement value to the determination flow data stored in the determination flow data storage section 13 (step S207). The determination flow data read from the determination flow data storage section 13 at this time is data of the fuel cell 21 in the second determination operation period.

Then, the gas instrument determiner section 12 determines whether or not the gas instrument 20 in use is the fuel cell 21 (step S208). If it is determined that the gas instrument 20 in use is the fuel cell 21 (YES in step S208), the gas instrument determiner section 12 may continue the determination control (return to step S201) or terminate the determination control (not shown in Fig. 8). On the other hand, if it is determined that the gas instrument 20 in use is not the fuel cell 21 (NO in step S208), the above mentioned predetermined operation for addressing the problem, for example, the operation for addressing a leakage of the gas, is performed (step 209), and the determination control is terminated.

As described above, in the determination control of the gas instrument 20 of Figs. 7 and 8, determination as to the fuel cell 21 is performed in the first determination operation period and the second determination operation period. Between the determination operation periods, the measurement time intervals of the actual measurement value of the gas flow obtained by the gas instrument determiner section 12 are made different, and the determination flow data is prestored as corresponding to this. Thus, the actual measurement value of the gas flow is obtained with a frequency corresponding to the determination as to the fuel cell 21, and compared to the corresponding determination flow data. Therefore, the determination as to the fuel cell 21 can be performed with a higher accuracy.

In the determination control performed in the first determination operation period and the determination control performed in the second determination operation period, the determination as to another gas instrument 20 is allowed to proceed concurrently in the first determination operation period. Therefore, if it is decidedly determined that the gas instrument 20 in use is the gas instrument 20 other than the fuel cell 21, in the first determination operation period, the determination operation in the second determination operation period may be ceased. If it is determined that there is a possibility that the gas instrument 20 in use is the fuel cell 21, in the first determination operation period, it is determined again whether or not the gas instrument 20 in use is the fuel cell 21 in the second determination operation period. Thus, the determination as to the fuel cell 21, which is difficult to determine normally, is performed twice. Therefore, the determination as to the fuel cell 21 can be performed with a higher accuracy.

In addition, many improvements and other embodiments of the present invention are apparent for those having ordinary skills in the art based on the above-described descriptions. Therefore, the above-described description should be construed as illustrations only, and to be presented for the purpose of teaching the best mode for conducting the present invention by a person having ordinary skills in the art. Therefore, details of the structures and/or functions may be substantially modified without departing from the scope of the present invention, which is defined by the appended claims.

### Industrial Applicability

The present invention is widely suitably used in fields of a flow meter device having a function for determining a gas instrument in use as well as measurement of a gas flow. Particularly, the present invention can be suitably used in an environment including a fuel cell as a gas instrument.

### Reference Signs List

- 10: flow meter device
- 11: flow measuring section
- 12: gas instrument determiner section
- 13: determination flow data storage section
- 20: gas instrument
- 21: fuel cell (gas instrument)
- 22: fan heater (gas instrument)
- 23: gas table (gas instrument)
- 33: fluid passage
- D1: difference value
- D2: difference value
- F: instantaneous flow
- T: first measurement time interval
- R: second measurement time interval

## Claims

1. A flow meter device (10) for measuring flows of a gas flowing into a plurality of gas instruments including a fuel cell (21), comprising:
a fluid passage (33) in which the gas flows;
a flow measuring section (11) for measuring a gas flow in the fluid passage (33);
a determination flow data storage section (13) for storing time series set data of the gas flow as determination flow data, for respective kinds of the plurality of gas instruments (20); and
a gas instrument determiner section (12); wherein
the gas instrument determiner section (12) compares the time series set data of actual measurement values of the gas flow obtained in a first determination operation period to the determination flow data and determines whether the gas instrument (20) in use is a fuel cell (21) or a general gas instrument other than the fuel cell (21);
wherein the first determination operation period which is a period from a time point when inflowing of the gas starts until a predetermined time lapses, and a second determination operation period which is a period which ends after the first determination operation period ends are set as periods in which the gas instrument determiner section (12) is allowed to perform a determination operation;
**characterized in that**:
only if the gas instrument determiner section (12) determines that there is a possibility that the gas instrument (20) in use is the fuel cell (21) or determines that the gas instrument (20) in use is not the general gas instrument, the gas instrument determiner section (12) shifts from the first determination operation period to the second determination operation period;
and **in that** the gas instrument determiner section (12) compares the time series set data of the actual measurement values of the gas flow obtained in the second determination operation period to the determination flow data and determines whether or not the gas instrument (20) in use is the fuel cell (21).

2. The flow meter device (10) according to claim 1,
wherein the second determination operation period is set to start in a period after the first determination operation period starts and before the first determination operation period

3. The flow meter device (10) according to claim 1,
wherein the flow measuring section (11) measures the gas flow at preset constant measurement time intervals;
wherein the gas instrument determiner section (12) determines the gas instrument (20) using the actual measurement value measured at each of the preset constant measurement time intervals in the first determination operation period; and
wherein the gas instrument determiner section (12) determines the gas instrument (20) using the actual measurement value extracted from actual measurement values respectively measured at plural preset constant measurement time intervals, with a frequency which is once in every plural preset constant measurement time intervals in the second determination operation period.

4. The flow meter device (10) according to claim 1,
wherein the flow measuring section (11) measures the gas flow at first measurement time intervals in the first determination operation period; and
wherein the flow measuring section measures the gas flow at second measurement time intervals in the second determination operation period.

5. The flow meter device (10) according to claim 3 or 4,
wherein the determination flow data stored in the determination flow data storage section (13) includes time series set data of difference flows for respective kinds of the plurality of gas instruments (20); and
wherein the gas instrument determiner section (12) performs the determination operation in such a manner that the gas instrument determiner section (12) compares a difference value between two gas flows measured continuously by the flow measuring section, to the determination flow data stored in the determination flow data storage section (13), the difference value being used as the actual measurement value.

6. The flow meter device (10) according to claim 3 or 4,
wherein the determination flow data stored in the determination flow data storage section (13) includes time series set data of difference flows for respective kinds of the plurality of gas instruments (20); and
wherein the gas instrument determiner section (12) performs the determination operation in such a manner that the gas instrument determiner section (12) compares a difference value calculated from instantaneous flows measured by the flow measuring section (11) at times which are apart by a time interval which is an integral multiple of the preset constant measurement time interval, to the determination flow data stored in the determination flow data storage section (13), the difference value being used as the actual measurement value.

## Patentansprüche

1. Durchflussmessvorrichtung (10) zum Messen des Durchflusses eines Gases, das in eine Vielzahl von Gasinstrumenten, einschließlich einer Brennstoffzelle (21), strömt, die umfasst:
einen Fluidkanal (33), in dem das Gas strömt;
einen Durchflussmessabschnitt (11) zum Messen einer Gasströmung in dem Fluidkanal (33);
einen Durchfluss-Bestimmungsdaten-Speicherabschnitt (13) zum Speichern von Zeitseriensatzdaten der Gasströmung als Durchfluss-Bestimmungsdaten für jeweilige Arten der Vielzahl von Gasinstrumenten (20); und
einen Gasinstrument-Bestimmungsabschnitt (12);
wobei
der Gasinstrument-Bestimmungsabschnitt (12) die eingestellten Zeitseriendaten der tatsächlichen Messwerte der Gasströmung, die in einer ersten Bestimmungsoperationsperiode erhalten wurden, mit den Durchfluss-Bestimmungsdaten vergleicht und bestimmt, ob das verwendete Gasinstrument (20) eine Brennstoffzelle ist (21) oder ein allgemeines Gasinstrument, das keine Brennstoffzelle (21) ist;
wobei die erste Bestimmungsoperationsperiode, die eine Periode von einem Zeitpunkt ist, an dem das Einströmen des Gases beginnt, bis eine vorbestimmte Zeit verstreicht, und eine zweite Bestimmungsoperationsperiode, die eine Periode ist, die endet, nachdem die erste Bestimmungsoperationsperiode endet, als Perioden eingestellt sind, in denen es dem Gasinstrument-Bestimmungsabschnitt (12) erlaubt wird, eine Bestimmungsoperation durchzuführen;
**dadurch gekennzeichnet, dass**:
Nur wenn der Gasinstrument-Bestimmungsabschnitt (12) bestimmt, dass es eine Möglichkeit gibt, dass das verwendete Gasinstrument (20) die Brennstoffzelle (21) ist, oder bestimmt, dass das verwendete Gasinstrument (20) nicht das allgemeine Gasinstrument ist, der Gasinstrument-Bestimmungsabschnitt (12) von der ersten Bestimmungsoperationsperiode zu der zweiten Bestimmungsoperationsperiode wechselt;
und dadurch, dass
der Gasinstrument-Bestimmungsabschnitt (12) die eingestellten Zeitseriendaten der tatsächlichen Messwerte der Gasströmung, die in der zweiten Bestimmungsoperationsperiode erhalten werden, mit den Durchfluss-Bestimmungsdaten vergleicht und bestimmt, ob das verwendete Gasinstrument (20) die Brennstoffzelle (21) ist oder nicht.

2. Durchflussmessvorrichtung (10) nach Anspruch 1,
wobei die zweite Bestimmungsoperationsperiode so eingestellt ist, dass sie in einer Periode beginnt, nachdem die erste Bestimmungsoperationsperiode beginnt und bevor die erste Bestimmungsoperationsperiode endet.

3. Durchflussmessvorrichtung (10) nach Anspruch 1,
wobei der Durchflussmessabschnitt (11) die Gasströmung in voreingestellten konstanten Messzeitintervallen misst;
wobei der Gasinstrument-Bestimmungsabschnitt (12) das Gasinstrument (20) unter Verwendung des tatsächlichen Messwerts bestimmt, der in jedem der voreingestellten konstanten Messzeitintervalle in der ersten Bestimmungsoperationsperiode gemessen wird; und
wobei der Gasinstrument-Bestimmungsabschnitt (12) das Gasinstrument (20) unter Verwendung des tatsächlichen Messwerts bestimmt, der aus tatsächlichen Messwerten extrahiert wird, die jeweils zu mehreren voreingestellten konstanten Messzeitintervallen gemessen werden, mit einer Frequenz, die einmal in allen mehreren voreingestellten konstanten Messzeitintervallen in der zweiten Bestimmungsoperationsperiode vorhanden ist.

4. Durchflussmessvorrichtung (10) nach Anspruch 1,
wobei der Durchflussmessabschnitt (11) in der ersten Bestimmungsoperationsperiode die Gasströmung in ersten Messzeitintervallen misst; und
wobei der Durchflussmessabschnitt in der zweiten Bestimmungsoperationsperiode die Gasströmung in zweiten Messzeitintervallen misst.

5. Durchflussmessvorrichtung (10) nach Anspruch 3 oder 4,
wobei die Durchfluss-Bestimmungsdaten, die in dem Durchfluss-Bestimmungsdaten-Speicherabschnitt (13) gespeichert sind, Zeitseriensatzdaten von Differenzströmungen für jeweilige Arten der Vielzahl von Gasinstrumenten (20) umfassen; und
wobei der Gasinstrument-Bestimmungsabschnitt (12) den Bestimmungsvorgang so durchführt, dass der Gasinstrument-Bestimmungsabschnitt (12) einen Differenzwert zwischen zwei kontinuierlich durch den Durchflussmessabschnitt gemessenen Gasflüssen mit den in dem Durchfluss-Bestimmungsdaten-Speicherabschnitt (13) gespeicherten Durchfluss-Bestimmungsdaten vergleicht, wobei der Differenzwert als tatsächlicher Messwert verwendet wird.

6. Durchflussmessvorrichtung (10) nach Anspruch 3 oder 4,
wobei die Durchfluss-Bestimmungsdaten, die in dem Durchfluss-Bestimmungsdaten-Speicherabschnitt (13) gespeichert sind, Zeitseriensatzdaten von Differenzströmungen für jeweilige Arten der Vielzahl von Gasinstrumenten (20) umfassen; und
wobei der Gasinstrument-Bestimmungsabschnitt (12) den Bestimmungsvorgang so durchführt, dass der Gasinstrument-Bestimmungsabschnitt (12) einen Differenzwert vergleicht, der aus Momentandurchflüssen berechnet wird, die durch den Durchflussmessabschnitt (11) zu Zeiten gemessen werden, die um ein Zeitintervall auseinander liegen, das ein ganzzahliges Vielfaches des voreingestellten konstanten Messzeitintervalls ist, mit den Durchfluss-Bestimmungsdaten, die in dem Durchfluss-Bestimmungsdaten-Speicherabschnitt (13) gespeichert sind, wobei der Differenzwert als der tatsächliche Messwert verwendet wird.

## Revendications

1. Dispositif de débitmètre (10) pour mesurer les écoulements d'un gaz s'écoulant dans une pluralité d'instruments à gaz comprenant une pile à combustible (21), comprenant :
un passage de fluide (33) dans lequel s'écoule le gaz ;
une section de mesure d'écoulement (11) pour mesurer un écoulement de gaz dans le passage de fluide (33) ;
une section de stockage de données d'écoulement de détermination (13) pour stocker des données d'ensemble de séries temporelles de l'écoulement de gaz en tant que données d'écoulement de détermination, pour des types respectifs de la pluralité d'instruments à gaz (20) ; et
une section de détermination d'instrument à gaz (12);
dans lequel la section de détermination d'instrument à gaz (12) compare les données d'ensemble de séries temporelles de valeurs de mesure réelles de l'écoulement de gaz obtenues dans une première période d'opération de détermination aux données d'écoulement de détermination et détermine si l'instrument à gaz (20) utilisé est une pile à combustible (21) ou un instrument à gaz général autre que la pile à combustible (21) ;
dans lequel la première période d'opération de détermination qui est une période à partir d'un moment où l'afflux du gaz commence jusqu'à ce qu'un temps prédéterminé s'écoule, et une deuxième période d'opération de détermination qui est une période qui se termine après la fin de la première période d'opération de détermination sont définies comme des périodes dans lesquelles la section de détermination d'instrument à gaz (12) est autorisée à effectuer une opération de détermination ;
**caractérisé en ce que** :
uniquement si la section de détermination d'instrument à gaz (12) détermine qu'il existe une possibilité que l'instrument à gaz (20) utilisé soit la pile à combustible (21) ou détermine que l'instrument à gaz (20) utilisé n'est pas l'instrument à gaz général, la section de détermination d'instrument à gaz (12) passe de la première période d'opération de détermination à la deuxième période d'opération de détermination ;
et **en ce que** la section de détermination d'instrument à gaz (12) compare les données d'ensemble de séries temporelles des valeurs de mesure réelles de l'écoulement de gaz obtenues dans la deuxième période d'opération de détermination aux données d'écoulement de détermination et détermine si oui ou non l'instrument à gaz (20) en utilisation est la pile à combustible (21).

2. Dispositif de débitmètre (10) selon la revendication 1,
dans lequel la deuxième période d'opération de détermination est établie pour commencer dans une période après le début de la première période d'opération de détermination et avant la fin de la première période d'opération de détermination.

3. Dispositif de débitmètre (10) selon la revendication 1,
dans lequel la section de mesure d'écoulement (11) mesure l'écoulement de gaz à des intervalles de temps de mesure constants prédéfinis ;
dans lequel la section de détermination d'instrument à gaz (12) détermine l'instrument à gaz (20) en utilisant la valeur de mesure réelle mesurée à chacun des intervalles de temps de mesure constants prédéfinis dans la première période d'opération de détermination ; et
dans lequel la section de détermination d'instrument à gaz (12) détermine l'instrument à gaz (20) en utilisant la valeur de mesure réelle extraite des valeurs de mesure réelles respectivement mesurées à plusieurs intervalles de temps de mesure constants prédéfinis, avec une fréquence qui est d'une fois par chaque pluralité d'intervalles de temps de mesure constants prédéfinis dans la deuxième période d'opération de détermination.

4. Dispositif de débitmètre (10) selon la revendication 1,
dans lequel la section de mesure d'écoulement (11) mesure l'écoulement de gaz à des premiers intervalles de temps de mesure dans la première période d'opération de détermination ; et
dans lequel la section de mesure d'écoulement mesure l'écoulement de gaz à des deuxièmes intervalles de temps de mesure dans la deuxième période d'opération de détermination.

5. Dispositif de débitmètre (10) selon la revendication 3,
dans lequel les données d'écoulement de détermination stockées dans la section de stockage de données d'écoulement de détermination (13) comprennent des données d'ensemble de séries temporelles d'écoulement de différence pour des types respectifs de la pluralité d'instruments à gaz (20) ; et
dans lequel la section de détermination d'instrument à gaz (12) effectue l'opération de détermination de telle manière que la section de détermination d'instrument à gaz (12) compare une valeur de différence entre deux débits de gaz mesurés en continu par la section de mesure d'écoulement, aux données d'écoulement de détermination stockées dans la section de stockage de données d'écoulement de détermination (13), la valeur de différence étant utilisée comme valeur de mesure réelle.

6. Dispositif de débitmètre (10) selon la revendication 3,
dans lequel les données d'écoulement de détermination stockées dans la section de stockage de données d'écoulement de détermination (13) comprennent des données d'ensemble de séries temporelles d'écoulement de différence pour des types respectifs de la pluralité d'instruments à gaz (20) ; et
dans lequel la section de détermination d'instrument à gaz (12) effectue l'opération de détermination de telle manière que la section de détermination d'instrument à gaz (12) compare une valeur de différence calculée à partir d'écoulements instantanés mesurés par la section de mesure d'écoulement (11) à des moments qui sont séparés par un intervalle de temps qui est un multiple entier de l'intervalle de temps de mesure constant prédéfini, aux données d'écoulement de détermination stockées dans la section de stockage de données d'écoulement de détermination (13), la valeur de différence étant utilisée comme valeur de mesure réelle.
